# DEMANDE DE BREVET EUROPEEN

(11) **EP 2 879 228 A1**
(43) Date de publication de la demande: **03.06.2015**
(21) Numéro de dépôt: 14193921.5
(22) Date de dépôt: 19.11.2014
(51) Int. Cl.: H01M 10/625, H01M 10/647, H01M 10/6553, H01M 10/656, B60L 11/18

(54) **Module de batterie pour véhicule électrique ou hybride intégrant un échangeur de chaleur en contact avec les bornes du module**

(30) Priorité: 29.11.2013 FR 1361834
(71) Demandeur: VALEO SYSTEMES THERMIQUES, 78320 Le Mesnil Saint-Denis (FR)
(72) Inventeur: Feuillard, Vincent, 78320 Le Mesnil St Denis (FR); Elliot, Gilles, 91080 Courcouronnes (FR); Rivet, Gilles, 28500 Charpont (FR)
(74) Mandataire: Pellegrini, Marie Claude

(57) **Abrégé**

L'invention porte principalement sur un module de batterie pour véhicule électrique ou hybride comportant un empilement de cellules électrochimiques souples pour chacune desquelles l'une des tranches comporte au moins une borne positive ou négative en regard de laquelle se trouve une borne de signe opposée de la cellule adjacente, ces deux bornes formant un couple de bornes reliées électriquement. Le module de l'invention est essentiellement caractérisé en ce qu'il comporte un échangeur thermique (12) comprenant au moins une entrée de fluide (13a, 13b), au moins une sortie de fluide (14), et au moins un conduit de circulation de fluide (15) qui prévoit des portions d'échange thermique (19, 20) disposées chacune entre les deux bornes (5, 6) d'un couple de bornes (7, 8) qui sont reliées électriquement au moyen d'un élément de liaison électrique (22) exerçant une force d'appui sur chaque borne (5, 6) contre la portion d'échange thermique (19, 20) du conduit de circulation de fluide (15).

## Description

L'invention concerne principalement un module de batterie pour véhicule électrique ou hybride muni d'un échangeur de chaleur.

L'invention porte également sur une batterie associée faite d'un assemblage de plusieurs modules de batterie de ce type.

Le domaine technique de l'invention concerne les sources d'énergie à stockage électrochimique composées de plusieurs cellules électrochimiques connectées en série. Ces sources d'énergie s'appliquent notamment aux batteries électriques pour assurer la traction des véhicules électriques ou hybrides.

Une batterie est constituée d'un assemblage de modules, eux-mêmes constitués d'un assemblage de cellules électrochimiques.

Dans ces cellules ont lieu des réactions électrochimiques réversibles permettant de produire du courant lors de la décharge de la batterie, ou de stocker l'énergie lorsque la batterie est en charge.

Les cellules électrochimiques peuvent être de type cylindrique, prismatique ou souple. Dans la technologie des cellules souples, communément appelées « pouch-cells », chaque cellule est constituée d'une plaque métallique intégrant une électrode positive, une électrode négative et un séparateur. Chaque cellule comporte également une borne positive et une borne négative.

Chaque borne positive et négative d'une cellule est positionnée en regard d'une borne de signe opposée de la cellule adjacente en formant un couple de bornes reliées électriquement.

Les charges et les décharges de la batterie provoquent une production de chaleur au niveau des bornes des modules et dans les électrodes supportant des réactions chimiques exothermiques, ce qui peut engendrer une détérioration de ces électrodes ainsi que des cellules associées.

Dans ce contexte, la présente invention vise un module de batterie permettant de dissiper la chaleur en excès et d'homogénéiser la température dans la chimie des électrodes via les bornes des cellules du module.

A cet effet, le module de batterie pour véhicule électrique ou hybride de l'invention est essentiellement caractérisé en ce qu'il comporte un échangeur thermique comprenant au moins une entrée de fluide, au moins une sortie de fluide, et au moins un conduit de circulation de fluide qui prévoit des portions d'échange thermique disposées chacune entre les deux bornes d'un couple de bornes qui sont reliées électriquement au moyen d'un élément de liaison électrique exerçant une force d'appui sur chaque borne contre la portion d'échange thermique concernée du conduit de circulation de fluide.

Le module de l'invention peut également comporter les caractéristiques optionnelles suivantes considérées isolément ou selon toutes les combinaisons techniques possibles :
- selon une première configuration, chaque cellule comporte une borne sur chacune de ses tranches opposées de sorte que le module présente deux rangées de couples de bornes situées chacune sur une face opposée du module, l'échangeur thermique comporte un premier conduit de circulation de fluide situé au niveau d'une face du module comportant la première rangée de couples de bornes et dont les portions d'échanges thermiques sont disposées chacune entre les deux bornes d'un couple de bornes, et l'échangeur thermique comporte un second conduit de circulation de fluide situé au niveau de la face opposée du module comportant la seconde rangée de couples de bornes et dont les portions d'échanges thermiques sont disposées chacune entre les deux bornes d'un couple de bornes.
- dans cette configuration, chacun des premier et second conduits de circulation de fluide peut serpenter en passant d'un couple de bornes au couple de bornes adjacent de la face du module considérée.
- dans cette même configuration, chacun des premier et second conduits de circulation de fluide comporte deux tubes collecteurs de fluide parallèles reliés entre eux par des portions d'échanges thermiques parallèles disposées chacune entre les deux bornes d'un couple de bornes.
- selon une autre configuration, chaque cellule comporte deux bornes respectivement positive et négative disposées sur une tranche d'une cellule, de sorte que le module présente deux rangées décalées de couples de bornes sur l'une de ses faces, et l'échangeur thermique comporte au moins un conduit de circulation dont les portions d'échanges thermiques sont disposées chacune entre les deux bornes d'un couple de bornes.
- dans cette configuration, l'échangeur thermique peut comporter un premier conduit de circulation du fluide qui serpente au niveau de la première rangée en passant d'un couple de bornes à un couple de bornes adjacent, et un second conduit de circulation du fluide qui serpente au niveau de la seconde rangée en passant d'un couple de bornes à un couple de bornes adjacent.
- dans cette même configuration, l'échangeur thermique peut comporter un conduit de circulation du fluide qui serpente entre chaque couple de bornes des première et seconde rangées en passant alternativement d'un couple de bornes de la première rangée à un couple de bornes le plus proche de la seconde rangée.
- en restant dans cette configuration, l'échangeur thermique peut comporter un premier et un second tubes collecteurs externes reliés chacun à une entrée de fluide respective et un tube collecteur central relié à une sortie de fluide, le premier tube collecteur externe et le tube collecteur central sont reliées entre eux par des portions d'échanges thermiques parallèles disposées chacune entre les deux bornes d'un couple de bornes de la première rangée, et le second tube collecteur externe et le tube collecteur central sont reliés entre eux par des portions d'échanges thermiques parallèles disposées chacune entre les deux bornes d'un couple de bornes de la seconde rangée.
- chaque élément de liaison électrique comporte deux branches parallèles reliées par une portion de jonction, chaque branche parallèle venant en appui extérieur contre la borne concernée du couple de bornes.
- chaque portion d'échange thermique est isolée électriquement des deux bornes entre lesquelles il est interposé.
- soit les portions d'échanges thermiques sont faites d'un tube en plastique, soit les portions d'échanges thermiques sont faites d'un surmoulage en plastique sur un tube métallique, soit que les portions d'échanges thermiques sont faites d'un tube métallique entouré d'un gainage en plastique.

L'invention porte enfin sur une batterie pour véhicule électrique ou hybride comportant un assemblage de modules de batterie tels que précédemment définis.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une vue en perspective éclatée du module de l'invention selon une première variante,
- la figure 2 est une vue partielle agrandie illustrant l'échangeur thermique du module de la première variante avant fixation des éléments de liaison électrique sur les bornes des cellules,
- la figure 3 est une vue partielle en perspective et en coupe de l'échangeur thermique du module de la première variante après fixation des éléments de liaison électrique sur les bornes des cellules,
- la figure 4 est une vue en coupe selon la ligne IV-IV de la figure 3,
- la figure 5 est une vue en perspective de l'une des faces d'un module de l'invention selon une seconde variante,
- la figure 6 est une vue de dessus d'un module de l'invention selon une troisième variante,
- la figure 7 est une vue de dessus d'un module de l'invention selon une quatrième variante, et
- la figure 8 est une vue de dessus d'un module de l'invention selon une cinquième variante.

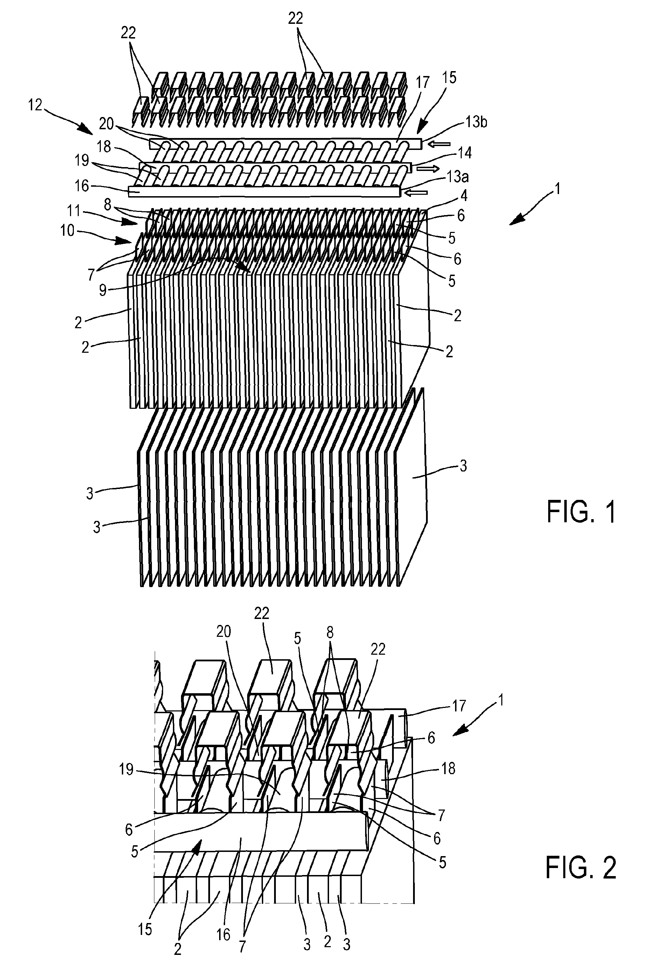

En référence aux figures 1 à 4 illustrant une première variante de réalisation de l'invention, un module 1 comporte une pluralité de cellules 2 empilées et séparées les unes des autres par une plaque isolante 3, par exemple faite de mousse.

Chaque cellule 2 comporte sur sa tranche supérieure 4 une borne positive 5 et une borne négative 6.

La borne positive 5 de cette cellule 2 est disposée en regard de la borne négative 6 d'une première cellule adjacente 2, tandis que la borne négative 6 de la première cellule 2 est disposée en regard de la borne positive 5 de la seconde cellule adjacente 2. Cette disposition décalée et alternée des bornes positives 5 et des bornes négatives 6 des cellules 2 de l'empilement se reproduit sur toute la longueur du module 1.

Chaque borne positive 5 associée à la borne négative 6 de la cellule adjacente forment un couple de bornes 7,8.

Selon la disposition précédemment décrite des bornes 5, 6 pour chaque cellule 2, le module 1 comporte ainsi sur l'une 9 de ses faces une première rangée 10 de couples de bornes 7 et une seconde rangée 11 de couples de bornes 8.

Selon l'invention et en référence plus particulièrement à la figure 1, un échangeur thermique 12 comporte deux entrées de fluide 13a,13b et une sortie de fluide 14 reliées entre elles par un conduit de circulation de fluide 15.

Le conduit de circulation de fluide 15 comporte un premier tube collecteur externe 16 relié à la première entrée de fluide 13a, un second tube collecteur externe 17 reliée à la seconde entrée de fluide 13b et un tube collecteur central 18 reliée à la sortie de fluide 15 et s'étendant entre les premier 16 et second 17 tubes collecteurs externes. Ces trois tubes collecteurs 15, 16, 17 s'étendent parallèlement sur toute la longueur de la face 9 du module 1 comportant les première 10 et seconde 11 rangées de couples de bornes 7,8.

Les premier 16 et second 17 tubes collecteurs sont disposés de part et d'autre des première 10 et seconde 11 rangée de bornes, et le tube collecteur central 18 est logé entre ces deux rangées 10,11 de bornes.

Entre le premier tube collecteur 16 et le tube collecteur central 18, s'étendent une pluralité de portions d'échange thermique parallèle 19 disposées chacune entre deux bornes 5,6 d'un couple de bornes 7 de la première rangée de bornes 10.

De façon symétrique, entre le second tube collecteur 17 et le tube collecteur central 18, s'étendent une pluralité de portions d'échange thermique parallèle 20 disposées chacune entre deux bornes 5,6 d'un couple de bornes 8 de la seconde rangée de bornes 11.

Le fluide circule ainsi dans les premier 16 et second 17 tubes collecteurs depuis les deux entrées de fluide associées 13a,13b, puis dans les portions d'échange thermique 19,20, avant d'être collecté dans le tube collecteur central 18 et évacué au niveau de la sortie de fluide 15.

Selon l'invention, des éléments de liaison électrique 22 sont apposés au niveau de chacun des couples de bornes 7,8.

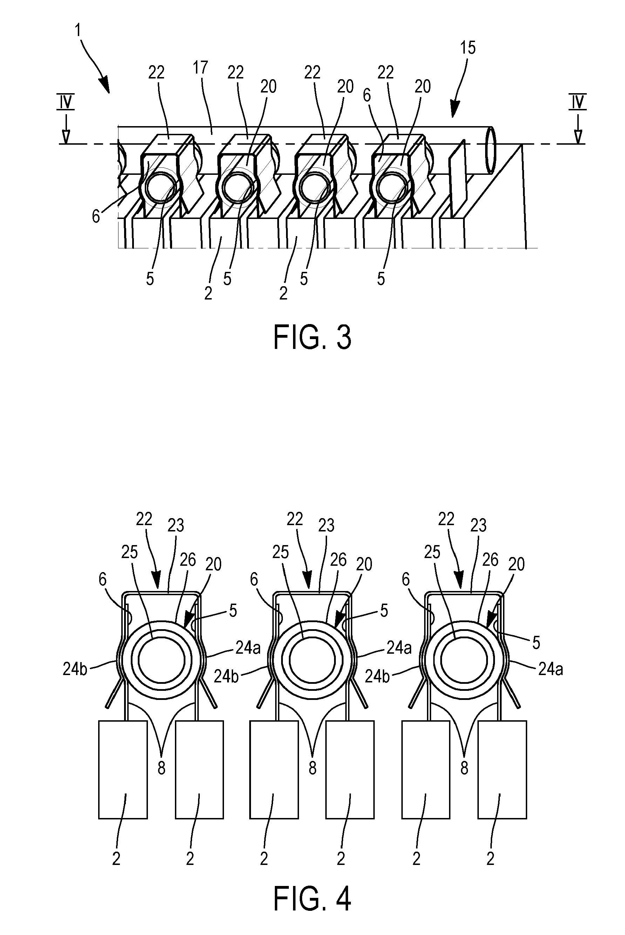

Plus précisément, et en référence à la figure 4, chaque élément de liaison électrique 22 comporte deux branches parallèles 24a, 24b reliées par une portion de jonction 23. Chaque branche parallèle 24a, 24b vient en appui extérieur contre la borne 5,6 concernée du couple de bornes 8.

Ainsi, chaque élément de liaison électrique 22 assure, par contact entre la face interne de chacune de ses branches parallèles 24a, 24b avec respectivement la borne positive 5 et la borne négative 6 de chaque couple de bornes 7,8, la connexion électrique entre ces deux bornes 5,6.

Par ailleurs, le positionnement de l'élément électrique 22 sur chacune des bornes 5,6 d'un couple de bornes 7,8 tels que précédemment décrits, permettent de plaquer chaque borne 5,6 contre la portion d'échange thermique considérée 19,20, ce dont il résulte un échange thermique entre les bornes 5,6 et la portion d'échange thermique 19,20. Le plus souvent, il sera question d'une dissipation de la chaleur produite par l'échauffement des bornes 5,6 vers l'échangeur thermique 12 dans lequel circule un liquide réfrigérant, par exemple du glycol.

En référence à la figure 4, chaque portion d'échange thermique 20 est faite d'un tube métallique 25 entouré d'un gainage en plastique 26 permettant d'isoler électriquement le conduit de circulation du fluide 15 des bornes 5,6 du module 1.

En variante non représentée, les portions d'échange thermique 20, et par extension le conduit de circulation de fluide 15 dans son ensemble, peuvent être fait d'un surmoulage en plastique sur un tube métallique ou encore d'un tube en plastique.

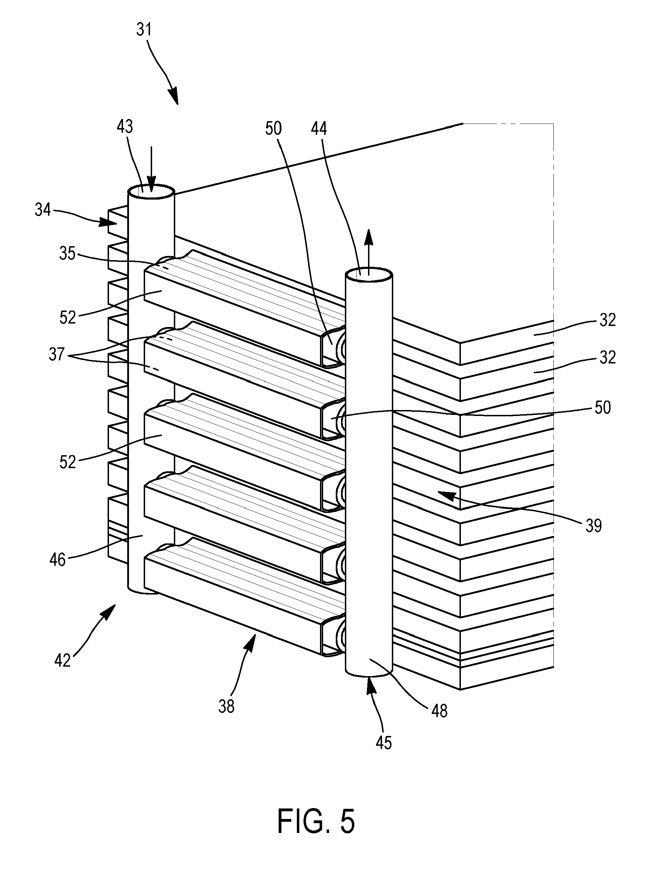

En référence à la figure 5, la configuration de l'échangeur thermique 12 de la première variante s'adapte facilement à un module 31 pour lequel chaque cellule 32 comporte sur l'une de ses tranches 34 uniquement une borne positive 35 ou une borne négative (non visible sur cette figure), et sur sa tranche opposée non représentée la borne de signe opposée. Ainsi, le module 31 présente sur l'une de ses faces 39 une première rangée 38 de couples de bornes 37, et sur sa face opposée non représentée la seconde rangée de couples de bornes.

L'échangeur thermique 42 comporte un premier conduit de circulation de fluide 45 situé au niveau de sa première face 39, et un second conduit de circulation de fluide non visible sur sa face opposée.

Le premier conduit de circulation de fluide 45 comporte un premier tube collecteur 46 relié à l'entrée de fluide 43 et un second tube collecteur 48 relié à la sortie de fluide 44, ces deux tubes collecteurs 46,48 s'étendant parallèlement sur la longueur du module 31 de part et d'autre de la première rangée de couples de bornes 38.

Entre le premier tube collecteur 46 et le second tube collecteur 48, s'étendent une pluralité de portions d'échange thermique parallèles 50 disposées chacune entre deux bornes 35 d'un couple de bornes 37 de la première rangée de bornes 38.

En symétrie, sur la face opposée non représentée, des portions d'échange thermique parallèles joignant un premier et un second tube collecteur du second conduit de circulation du fluide sont également disposées chacune entre les deux bornes de chaque couple de bornes.

Comme pour la première variante, un élément de liaison électrique 52 est disposé au niveau de chaque couple de bornes 37 en les reliant électriquement et en assurant leur appui de contact respectif contre la portion d'échange thermique 50.

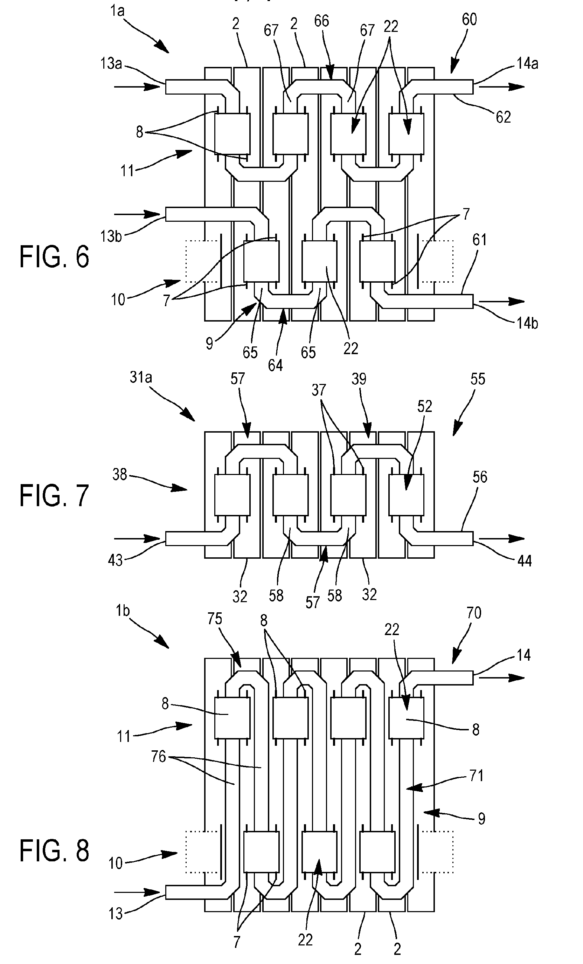

En référence à la figure 7, selon une autre variante de réalisation appliquée à un module 31 a du type de celui de la figure 5, l'échangeur thermique 55 comporte un premier conduit de circulation de fluide 56 au niveau de l'une des faces 39 et un second conduit de circulation de fluide non représenté au niveau de sa face opposée.

Comme illustré sur la figure 7, le premier conduit de circulation de fluide 56 serpente au niveau la première rangée de couples de bornes 38 depuis une entrée de fluide 43 jusqu'à une sortie de fluide 44, en passant d'un couple de bornes 37 à un couple de bornes 37 adjacente et en formant des séries d'épingles 57 faites notamment chacune de deux portions d'échange thermique 58 disposées chacune entre les deux bornes d'un couple de bornes 37. Le second conduit de circulation non visible présente la même configuration sur la face opposée du module 31 a.

En référence à la figure 6 et selon une autre variante de réalisation appliquée à un module 1a du type de celui de la figure 1, l'échangeur thermique 60 comporte un premier conduit de circulation de fluide 61 qui serpente, au niveau de la première rangée de bornes 10, en passant d'un couple de bornes 7 au couple de bornes adjacent 7 et en formant des séries d'épingles 64 faites notamment chacune de deux portions d'échange thermique parallèles 65 disposées chacune entre les deux bornes d'un couple de bornes 7.

L'échangeur thermique 60 présente de façon similaire sur la même face 9 du module 1a, un second conduit de circulation de fluide 62 qui serpente, au niveau de la seconde rangée de bornes 11, en passant d'un couple de bornes 8 au couple de bornes adjacent 8 et en formant des séries d'épingles 66 faites notamment chacune de deux portions d'échange thermique parallèles 67 disposées chacune entre les deux bornes d'un couple de bornes 8.

En référence à la figure 8 et selon une dernière variante de l'invention de réalisation appliquée à un module 1b du type de celui de la figure 1, l'échangeur thermique 70 comporte un unique conduit de circulation de fluide 71 qui serpente sur toute la longueur du module 1a, entre une entrée de fluide 13 et une sortie de fluide 14, en passant d'un couple de bornes 7 de la première rangée 10 au couple de bornes 8 de la seconde rangée 11 qui est situé le plus proche, puis de ce couple de bornes 8 de la seconde rangée 11 au couple de bornes 7 de la première rangée 10 situé le plus proche.

Le conduit de circulation de fluide 71 forme ainsi des séries d'épingles 75 faites notamment chacune de deux portions d'échange thermique parallèles 76 disposées chacune entre les deux bornes d'un couple de bornes 7,8 soit de la première rangée 10, soit de la seconde rangée 11.

Les échangeurs thermiques 12,42 décrits en référence aux figures 1 à 5 permettent d'obtenir une meilleure homogénéité en température dans le conduit de circulation de fluide associé 15,45 que pour les échangeurs thermiques en serpentin 55, 60, 70 décrits en référence aux figures 6 à 8. Pour améliorer l'homogénéité en température des échangeurs thermiques en serpentin 55, 60, 70, il est possible de prévoir un débit de circulation de fluide plus important.

Les modules décrits précédemment permettant ainsi de refroidir efficacement les bornes des cellules par contact de chacune de ces bornes avec un conduit de circulation de fluide.

Le refroidissement par un liquide permet de faire passer de fortes puissances thermiques comparé à un refroidissement par air. Par ailleurs, le même circuit de fluide peut assurer le refroidissement ou le réchauffement des cellules du module.

Le refroidissement des cellules par les bornes assure un refroidissement efficace de l'intégralité de la cellule en raison du coefficient d'échange thermique qui est important dans le plan principal de la cellule, c'est-à-dire allant des bornes vers les électrodes.

Le volume occupé par les échangeurs thermiques et les éléments de liaison électriques est faible puisqu'il ne dépasse pas de la largeur d'un module ni la hauteur des bornes.

Les interconnections de fluide s'effectueront selon les configurations décrites en dehors du module ce qui présente un intérêt pratique certain.

En outre, la connexion électrique des cellules est réalisée par les éléments de liaison électrique et ne nécessite pas l'utilisation d'un jeu de barres, autrement dénommé bus-bar.

Comme décrit précédemment, l'échangeur thermique du module de l'invention peut s'appliquer indifféremment à cellules souples pour lesquelles les électrodes sont situées d'un même coté, qu'à des cellules souples dont les électrodes sont en oppositions.

La plaque de mousse 3 décrite en référence à la figure 1 et intercalée entre deux cellules adjacentes 2 peut être remplacée par tout type de plaque élastique respectant les contraintes d'isolation électrique.

Cette plaque de mousse permet d'absorber les dilatations des cellules.

Un autre avantage de l'invention réside dans la présence des éléments de liaison métalliques qui ne relient que deux bornes adjacentes, ce dont il résulte que chaque élément métallique ne subit la dilatation que de deux cellules adjacentes, soit d'environ 2 millimètres contre 15 à 30 millimètres pour un module comportant entre 15 et 30 cellules.

Cet avantage, combiné à la présence des plaques de mousse, permet de pouvoir refroidir les cellules en assurant leur lien électrique et ce, sans contrainte des dilatations des cellules.

## Revendications

1. Module de batterie pour véhicule électrique ou hybride comportant un empilement de cellules électrochimiques souples pour chacune desquelles l'une des tranches comporte au moins une borne positive ou négative en regard de laquelle se trouve une borne de signe opposée de la cellule adjacente, ces deux bornes formant un couple de bornes reliées électriquement, **caractérisé en ce qu'**il comporte un échangeur thermique (12, 42, 55, 60, 70) comprenant au moins une entrée de fluide (13, 13a, 13b), au moins une sortie de fluide (14, 14a, 14b), et au moins un conduit de circulation de fluide (15 ; 45 ; 56 ; 61, 62 ; 71) qui prévoit des portions d'échange thermique (19, 20 ; 50 ; 58 ; 65, 67 ; 71) disposées chacune entre les deux bornes (5, 6 ; 35) d'un couple de bornes (7,8 ; 37) qui sont reliées électriquement au moyen d'un élément de liaison électrique (22, 52) exerçant une force d'appui sur chaque borne (5, 6; 35) contre la portion d'échange thermique concernée (19,20; 50; 58; 65, 67; 71) du conduit de circulation de fluide (15 ; 45 ; 56 ; 61, 62 ; 71).

2. Module de batterie selon la revendication 1, **caractérisé en ce que** chaque cellule (32) comporte une borne (35) sur chacune de ses tranches opposées (34) de sorte que le module (31, 31 a) présente deux rangées de couples de bornes (38) situées chacune sur une face opposée (39) du module (31, 31 a), **en ce que** l'échangeur thermique (42, 55) comporte un premier conduit de circulation de fluide (45, 56) situé au niveau d'une face (39) du module (31,31a) comportant la première rangée de couples de bornes (38) et dont les portions d'échanges thermiques (50, 58) sont disposées chacune entre les deux bornes (35) d'un couple de bornes (37), et **en ce que** l'échangeur thermique (55) comporte un second conduit de circulation de fluide situé au niveau de la face opposée du module (31, 31 a) comportant la seconde rangée de couples de bornes et dont les portions d'échanges thermiques sont disposées chacune entre les deux bornes d'un couple de bornes.

3. Module de batterie selon la revendication 2, **caractérisé en ce que** chacun des premier (56) et second conduit de circulation de fluide serpente en passant d'un couple de bornes (37) au couple de bornes adjacent (37) de la face du module considérée (39).

4. Module de batterie selon la revendication 2, **caractérisé en ce que** chacun des premier (45) et second conduits de circulation de fluide comporte deux tubes collecteurs de fluide parallèles (46, 48) reliés entre eux par des portions d'échanges thermiques parallèles (50) disposées chacune entre les deux bornes (35) d'un couple de bornes (37).

5. Module de batterie selon la revendication 1, **caractérisé en ce que** chaque cellule (2) comporte deux bornes respectivement positive (5) et négative (6) disposées sur une tranche (4) d'une cellule (2), de sorte que le module (1, 1a, 1 b) présente deux rangées décalées (10, 11) de couples de bornes (7, 8) sur l'une de ses faces (9), et **en ce que** l'échangeur thermique (12,60,70) comporte au moins un conduit de circulation (15; 61,62; 71) dont les portions d'échanges thermiques (19,20 ; 65,67 ; 76) sont disposées chacune entre les deux bornes (5, 6) d'un couple de bornes (7, 8).

6. Module de batterie selon la revendication 5, **caractérisé en ce que** l'échangeur thermique (60) comporte un premier conduit de circulation du fluide (61) qui serpente au niveau de la première rangée (10) en passant d'un couple de bornes (7) à un couple de bornes adjacent (7), et un second conduit de circulation du fluide (62) qui serpente au niveau de la seconde rangée (11) en passant d'un couple de bornes (8) à un couple de bornes adjacent (8).

7. Module de batterie selon la revendication 5, **caractérisé en ce que** l'échangeur thermique (70) comporte un conduit de circulation du fluide (71) qui serpente entre chaque couple de bornes (7, 8) des première (10) et seconde (11) rangées en passant alternativement d'un couple de bornes (7) de la première rangée (10) à un couple de bornes (8) le plus proche de la seconde rangée (11).

8. Module de batterie selon la revendication 5, **caractérisé en ce que** l'échangeur thermique (15) comporte un premier (16) et un second (17) tubes collecteurs externes reliés chacun à une entrée de fluide respective (13a, 13b) et un tube collecteur central (18) relié à une sortie de fluide (14), **en ce que** le premier tube collecteur externe (16) et le tube collecteur central (18) sont reliées entre eux par des portions d'échanges thermiques parallèles (19) disposées chacune entre les deux bornes (5, 6) d'un couple de bornes (7) de la première rangée (10), et **en ce que** le second tube collecteur externe (17) et le tube collecteur central (18) sont reliées entre eux par des portions d'échanges thermiques parallèles (20) disposées chacune entre les deux bornes (5, 6) d'un couple de bornes (8) de la seconde rangée (11).

9. Module de batterie selon l'une quelconque des revendications précédentes, **caractérisé en ce que** chaque élément de liaison électrique (22) comporte deux branches parallèles (24a, 24b) reliées par une portion de jonction (23), chaque branche parallèle (24a, 24b) venant en appui extérieur contre la borne (5,6 ; 35) concernée du couple de bornes (7,8 ; 37).

10. Module de batterie selon l'une quelconque des revendications précédentes, **caractérisé en ce que** chaque portion d'échange thermique (19, 20 ; 50 ; 58) est isolée électriquement des deux bornes (5, 6, 35) entre lesquelles il est interposé.

11. Module de batterie selon la revendication 10, **caractérisé en ce que**, soit les portions d'échanges thermiques (19,20; 50; 58) sont faites d'un tube en plastique, soit les portions d'échanges thermiques (19,20; 50; 58) sont faites d'un surmoulage en plastique sur un tube métallique, soit que les portions d'échanges thermiques (19, 20; 50; 58; 65,67; 76) sont faites d'un tube métallique (25) entouré d'un gainage en plastique (26).

12. Batterie pour véhicule électrique ou hybride, **caractérisé en ce qu'**elle comporte un assemblage de modules de batterie (1, 1a, 1b, 31, 31 a) selon l'une quelconque des revendications précédentes.
